Europäisches Patentamt

European Patent Office

Office européen des brevets

(11) Publication number: 0 258 845
A2

# EUROPEAN PATENT APPLICATION

(21) Application number: 87112582.9

(22) Date of filing: 28.08.87

(51) Int. Cl.⁴: F16C 33/62

(30) Priority: 29.08.86 JP 202936/86

(43) Date of publication of application:
09.03.88 Bulletin 88/10

(84) Designated Contracting States:
CH DE FR GB IT LI

(71) Applicant: Toshio Kobayashi
1-13, Kitakarasuyama 6-chome
Setagaya-ku Tokyo(JP)

(72) Inventor: Kobayashi, Toshio
1-12 Kitakarasuyama, 6-chome,
Setagaya-ku, Tokyo(JP)
Inventor: Kunifuji, Kazuo
308, 1-2 Hikonari 4-chome
Misato, Saitama-ken(JP)

(74) Representative: Kraus, Walter, Dr. et al
Patentanwälte Kraus, Weisert & Partner
Thomas-Wimmer-Ring 15
D-8000 München 22(DE)

(54) Ceramics bearing.

(57) Disclosed is a rolling bearing totaly made of ceramics.

The bearing consists of an outer ring, an inner ring and multiple balls or needles placed between the outer and inner rings, and the balls or needles are retained by a bracket provided on the outer ring or the inner ring and a retaining ring which cooperate with the bracket. Fixing of the retaining ring is achieved by engagement of screws or adhesion.

The ceramics bearing displays high durability as well as good heat-resistance and corrosion resistance.

EP 0 258 845 A2

## CERAMICS BEARING

### BACKGROUND OF THE INVENTION

#### Field of the Invention

The present invention relates to a rolling bearing made of ceramics.

#### Prior Art

The new ceramic materials which have become available by recent progress in fine ceramics technology are used, for example, skid-rails in furnaces, taking advantage of their wear-resistant property and low friction coefficient in addition to the familiar features of ceramics, heat-resistant and chemical-resistant.

On the other hand, the demand for miniaturization and higher performance of industrial and household machines requires that the bearings supporting rotating axles be smaller and lighter and resistant to higher load and higher rotation. Efforts have been made to meet the demand by improving the special alloy used as bearing material and upgrading the machining technology, but satisfactory results are not yet achieved.

### SUMMARY OF THE INVENTION

The object of the present invention is, in light of aforementioned present status of the technology, to provide bearings made of ceramic materials having superior property compared with conventional steel bearings.

### DRAWINGS

Fig. 1 and Fig. 2 illustrate an embodiment of the ceramics bearing according to the present invention; Fig 1 being a plan view of one half, and Fig. 2 being a longitudinal sectional view (the other halves are synmetrical to the center line).

Fig. 3 is an alternative of the embodiment illustrated in Fig. 1 and Fig. 2, and is a sectional view equivalent to Fig. 2.

Fig. 4 and Fig. 5 illustrate another alternative of the ceramics bearing shown in Figs. 1 and 2, and are sectional view equivalent to Fig. 2.

Fig. 6 illustrates another embodiment of the present invention, and is a sectional view equivalent to Figs. 2-5.

Fig. 7 illustrates an alternative of the embodiment shown in Fig. 6, and is a sectional view equivalent thereto.

### DETAILED EXPLANATION OF PREFERRED EMBODIMENTS

Referring to the drawings, the ceramics bearing of the present invention is explained below in detail.

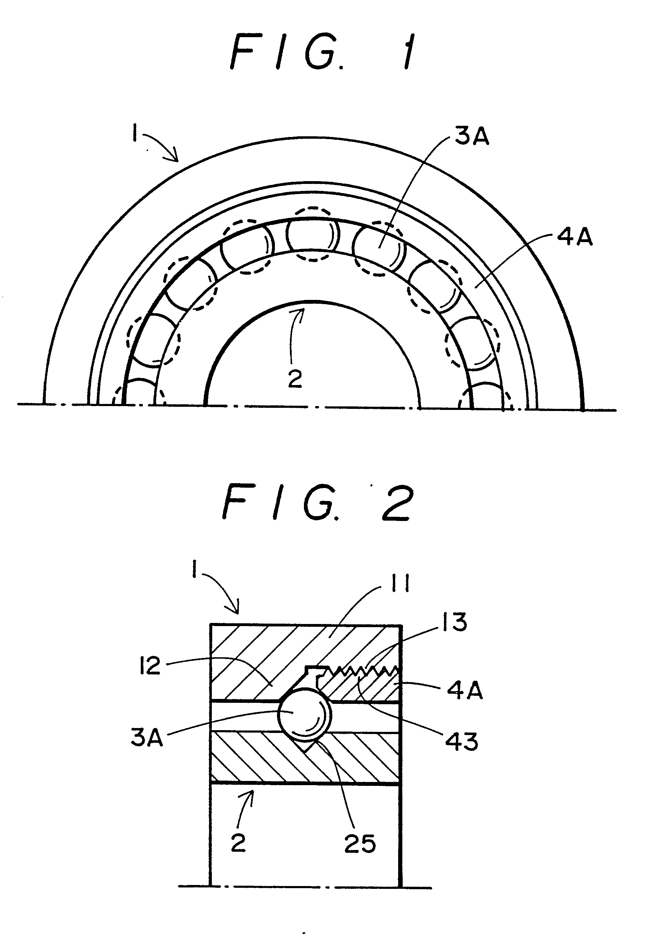

The bearing consists of, as shown in Fig. 1 and Fig. 2, an outer ring 1, an inner ring 2 and balls 3A or needles placed between the outer and inner ring 2 and balls 3A or needles placed between the outer and inner rings, and is characterized in that all the parts of the bearing are made of ceramics, the outer ring 1 has at one end (in the left in Fig. 2) of its cylindrical body 11 an inwardly extending bracket 12, and that the balls 3A or needles placed between the outer ring 1 and the inner ring 2 are retained with a retaining ring 4A which is fixed inside the outer ring.

In the embodiment shown in Fig. 2, the corner of the bracket 12 of the outer ring and the corner of the retaining ring 4A each has a inclined surface which together form a groove of a V-shaped cross section, and another groove 25 of a V-shaped cross section is provided at the surface of the inner ring facing to the aforesaid groove, and the balls 3A are retainned in the space formed by the interfacing V-shaped grooves.

Fixing of the retaining ring 4A to the outer ring 1 is, in the illustrated embodiments, achieved by engagement of the screw threaded on the inner surface of the outer ring opposite to the bracked and the screw threaded on the outer surface of the retaining ring 4A.

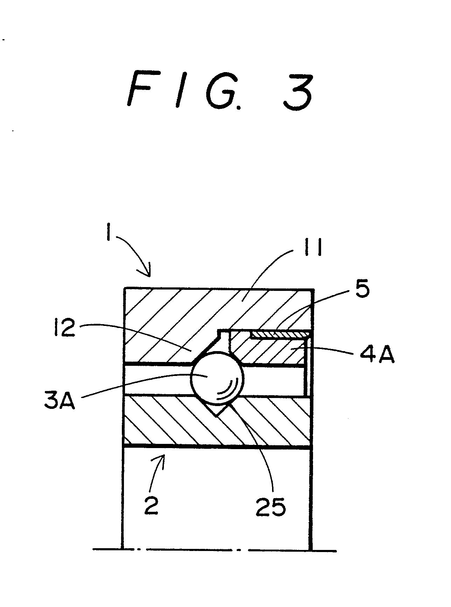

It is also possible to achieve fixing, as shown in Fig. 3, with a suitable adhesive 5.

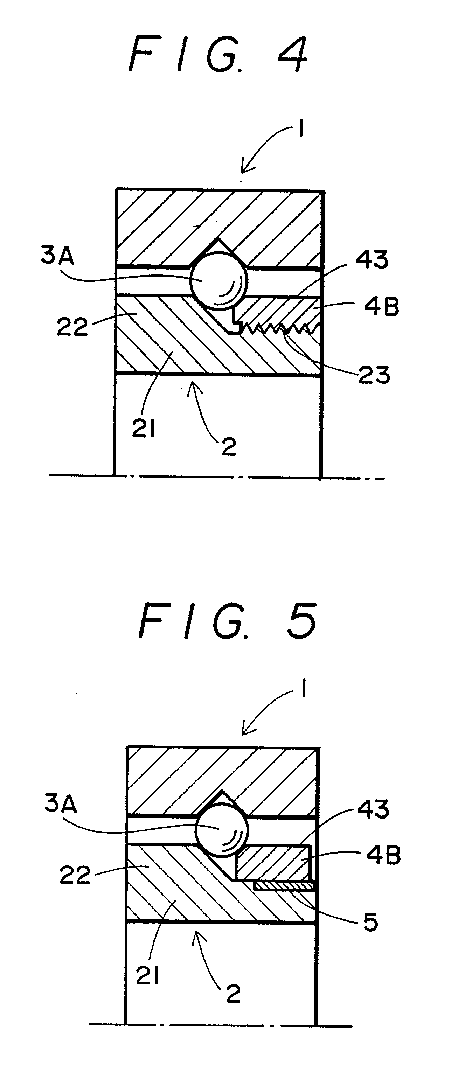

As can be easily understood, the aforementioned retaining ring can be installed on the inner ring instead of the outer ring. In that case, as shown in Fig. 4, the inner ring 2 has at one end (in the left in Fig. 4) of its cylindrical body 21 an outwardly extending bracket 21, and the balls 3A or needles placed between the outer ring 1 and the inner ring 2 are retained with a retaining ring 4B.

Fig. 4 shows the embodiment in which fixing of the retaining ring is made by engagement of screws, and Fig. 5, by adhesion.

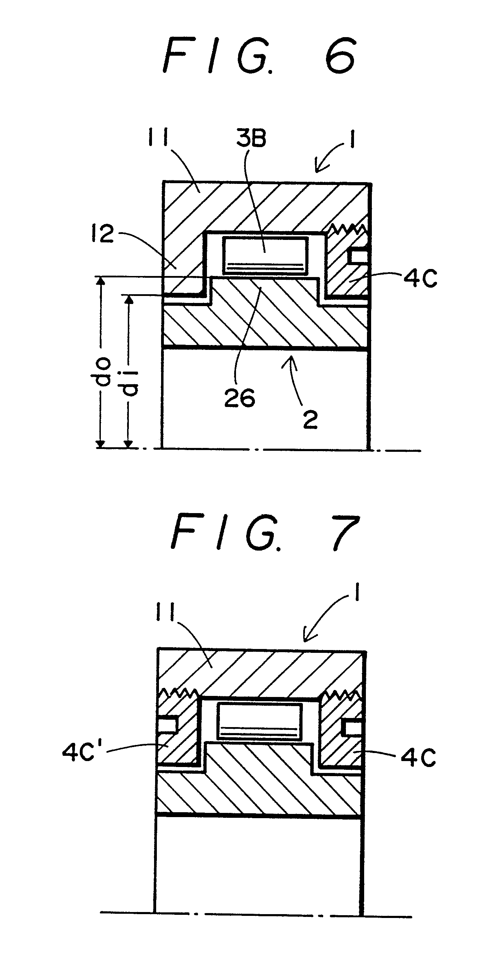

In another embodiment of the ceramics bearing of this invention, as shown in Fig 6, the middle poart 26 of the inner ring extends outwardly with its outside diameter "$d_o$" larger than the inside diam-

eter "$d_i$" of the bracket 12 of the outer ring, and the needles 3B are placed in the space formed between the bulge 26 of the inner ring and the cylindrical body 11 of the outer ring, and retained by the retaining ring 4C.

In another alternative of the embodiment shown in Fig. 6, as shown in Fig. 7, the inwardly extending bracket 12 at one end of the outer ring is a ring 4C' separate from the cylindrical body 11 and fixed by engagement of screws. This alternative is, therefore, identical to the bearing in which the needles 3B are retained by two retaining rings 4C screwed on both ends of the cylindrical body 11.

It should be noted that, in the embodiments shown in Fig. 6 and Fig. 7, the retaining ring can be installed on the inner ring as explained in connection with the alternative of Fig. 4.

There may be various modifications of the ceramics bearing according to this invention. The opening between the outer ring and the inner ring can be designed to be relatively wide or tight, or even substantially closed, and should be selected in accordance with the use of the bearing.

As for the ceramic materials, alumina, zirconia, silicon ritride and other materials called "fine ceramics" are preferable, and should be selected in accordance with the use of the bearing.

The production of the parts can be carried out by mixing fine powder of ceramics with appropriate binder, followed by press work. The green (intermediate product) thus obtained can be submitted to screw cutting and formation of V-shaped groove, and finally, to sintering. Installation of the retaining ring to the outer ring or the inner ring can be carried out by use of an appropriate adhesive.

The conventional steel bearings are assembled by shrinkage fit using the high thermal expansion coefficients of metals. Thermal expansion of ceramics is not so large as metals, and the possible elastic deformation is small. Therefore, ceramics bearings cannot be assembled by the conventional method. Inventors of this invention have discovered that ceramics materials shaped by utilizing an appropriate binder can be submitted to precision machining and that the machined products can be sintered with uniform shrinkage, thus providing sintered products of precise dimension. Using this method, the inventors established a technology which, for example, can cut a fine pitched external or internal thread and provide sintered products with precise fitting as threads cut on metal materials.

According to the present invention, by assistance of this technology and by employing the method of placing the balls or needles between the outer ring and the inner ring of the bearing and fixing the retaining ring typically by screw engagement, the inventors succeeded to provide bearings in which all the parts are made of ceramics.

The ceramic bearings according to this invention have extremely high durability compared with conventional steel bearings. Therefore, they are useful as the parts of machines which are subject to continuous operation for a long period or uses where maintenance are difficult. Characteristics inherent in ceramics materials such as chemical-resistance, acid-resistance, brine-resistance, make the bearings useful in chemical plants and maritime use. Since the bearings are heat-resistant, they are useful as bearings used at such a high temperatures that lubricants are not usable, or even higher temperatures. The advantage of wear-resistance means that the bearings may be suitably applied in such use as casters in clean-room for IC production.

## Example 1

A small size bearing with the structure illustrated in Figs. 1 and 2 was produced alumina. The finished dimension of the parts are designed to be as follows.

shaft diameter (inside diameter of the inner ring) 8 mm

outside diameter (outside diameter of the outer ring) 10 mm

balls-center diameter 13 mm

balls diameter 1.5 mm x 25

All the green was prepared by taking into account of 17% sintering shrinkage, and after sintering, the corner of the inwardly extending bracket of the outer ring and the inside corner of the retaining ring was abrased to form a 60° inclination against the axis. A V-shaped groove was also carved on the outside of the inner ring and polished to form 60° inclination each giving a total opening of 120°.

A shaft was fitted on the inner ring, and the retaining ring was screwed in with adhesive on the screw, and before the adhesive hardens, the retaining ring was screwed in and out to find the minimum torque with a torque meter attached to the outer ring. The retaining ring was left at the location where the torque was minimum to allow the adhesive to harden.

The condition under which the torque to the outer ring minimum is the condition where the V-shaped grooves contacting the balls face each other properly and the bearing is of the best function.

The adjustment of the retaining ring mentioned above can be of course carried out automatically in a mass production line.

## Example 2

A small size bearing with the structure illustrated in Fig. 7 was produced with zirconia. Dimensions of the parts are as follows.

shaft diameter (inside diameter of the inner ring)   8 mm

outside diameter of the inner ring (outward bracket)   12.5mm

outside diameter of the outer ring   20 mm

inside diameter of the outer ring   15.5mm

needles diameter   1.5mm x length 5mm x 27

A ring in the form of the retaining ring was fixed to the cylindrical body of the outer ring with an adhesive containing zirconia powder to form the bracket. The ring got stuck due to the powder on the screw surface, and was left for the adhesive to harden.

The needles were placed and the retaining ring was screwed in and fixed with the adhesive.

This bearing displayed good performance as a relatively high load bearing.

## Claims

1. A ceramics bering consisting of an outer ring, an inner ring and multiple balls or needless placed between the outer and inner rings, characterized in that all the parts of the bearing are made of ceramics, that the outer ring has at one end of its cylindrical body an inwardly extending bracket, and that the balls or needles placed between the outer and inner rings are retained by a retaining ring which is fixed inside the outer ring.

2. A ceramics bearing according to claim 1, wherein the corner of the bracket of the outer ring and the corner of the retaining ring form a groove with a V-shaped cross section and another groove with a V-shaped cross section is provided on the surface of the inner ring to face the aforesaid groove, and the balls are retained in the space formed by the interfacing grooves.

3. A ceramics bearing according to claim 1, wherein the middle part of the inner ring extends outwardly to form a bulge with its outside diameter larger than the inside diameter of the inwardly extending bracket of the outer ring, and the needles are retained in the place formed by the bulge of the inner ring and the cyrindrical body of the outer ring.

4. A ceramics bearing according to claim 1, wherein the inwardly extending bracket of the outer ring is a ring separate from the cylindrical body and installed by engagement of screws.

5. A ceramics bearing consisting of an outer ring, an inner ring and multiple balls or needles placed between the outer and inner rings, characterized in that all the parts of the bearing are made of ceramics, that the inner ring has at one end of its cylindrical body an outwardly extending bracket, and that the balls or needles placed between the outer and inner rings are retained by a retaining ring which is fixed outside the inner ring.

6. A ceramics bearing according to claim 5, wherein the corner of the bracket of the inner ring and the corner of the retaining ring form a groove with a V-shaped cross section, and another groove with a V-shaped cross section is provided on the surface of the outer ring to face the aforesaid groove, and the balls are retained in the space formed by the interfacing grooves.

7. A ceramic bearing according to claim 5, wherein the middle part of the outer ring extends inwardly to form a bracket with its inside diameter smaller than the outside diameter of th inner ring, and the needles are retained in the space formed by the bracket of the outer ring and the cyrindrical body of the inner ring.

8. A ceramics bearing according to claim 5, wherein the outwardly extending bracket of the inned ring is a separate ring fixed to the cylindrical body of the outer ring.

9. A ceramics bearing according to any one of claims 1 to 8, wherein fixing of the retaining ring is achieved by engagement of screws.

10. A ceramics bearing according to any one of claims 1 to 8, wherein fixing of the retaining ring is achieved by adhesion.

11. A ceramics bearing according to any one of claims 1 to 8, wherein the ceramics is selected from alumina, zirconia, silicon nitride and other fine ceramics.

12. A ceramics bearing according to any one of claims 1 to 8, wherein the surfaces of the outer ring, the inner ring and the retaining ring in contact with the balls or the needles have peripherals of true circles prepared by abrasion and polishing.

# FIG. 1

# FIG. 2

# F I G. 3

# F I G. 4

3A

43

22

4B

23

21

2

1

# F I G. 5

3A

43

22

4B

5

21

2

1

# F I G. 6

# F I G. 7